(19) Europäisches Patentamt
European Patent Office
Office européen des brevets

(11) Veröffentlichungsnummer: **0 304 854 B1**

(12) **EUROPÄISCHE PATENTSCHRIFT**

(45) Veröffentlichungstag der Patentschrift: **28.10.92**

(51) Int. Cl.⁵: **C09D 5/44**, C08G 18/54, C08G 18/64

(21) Anmeldenummer: **88113660.0**

(22) Anmeldetag: **23.08.88**

# (54) Bindemittel für die kathodische Elektrotauchlackierung.

(30) Priorität: **28.08.87 DE 3728762**

(43) Veröffentlichungstag der Anmeldung:
**01.03.89 Patentblatt 89/09**

(45) Bekanntmachung des Hinweises auf die Patenterteilung:
**28.10.92 Patentblatt 92/44**

(84) Benannte Vertragsstaaten:
**AT BE CH DE ES FR GB IT LI NL SE**

(56) Entgegenhaltungen:
**EP-A- 0 167 029**
**DE-B- 2 759 428**
**FR-A- 2 409 296**

(73) Patentinhaber: **BASF Lacke + Farben AG**
**Glasuritstrasse 1**
**W-4400 Münster(DE)**

(72) Erfinder: **Lawrenz, Dirk, Dr.**
**Neumuehle**
**W-6733 Hassloch(DE)**
Erfinder: **Schupp, Eberhard, Dr.**
**Theodor-Storm-Strasse 29**
**W-6718 Gruenstadt(DE)**
Erfinder: **Schwerzel, Thomas, Dr.**
**Budapester Strasse 51**
**W-6700 Ludwigshafen(DE)**

(74) Vertreter: **Springer, Hans Jörg, Dr. et al**
**BASF Aktiengesellschaft Patentabteilung**
**Carl-Bosch-Strasse 38**
**W-6700 Ludwigshafen(DE)**

**EP 0 304 854 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Bindemittel für die kathodische Elektrotauchlackierung, die durch Protonieren mit Säuren wasserverdünnbar sind, enthaltend

(A) 50 bis 95 Gew.% eines Polymerisations-, Polykondensations- oder Polyadditionsproduktes mit einem mittleren Molekulargewicht von 200 bis 20.000 mit primären und/oder sekundären Hydroxylgruppen und primären, sekundären und/oder tertiären Aminogruppen mit einer Aminzahl von 30 bis 150 und

(B) 5 bis 50 Gew.% eines Gemisches aus

(a) blockierten Polyisocyanaten und/oder Harnstoffkondensationsprodukten und

(b) einer oder mehrerer phenolischer Mannichbasen, erhältlich aus

($b_1$) einem oder mehreren mehrkernigen Polyphenolen,

($b_2$) Formaldehyd oder einer Formaldehyd-liefernden Verbindung und

($b_3$) einem oder mehren sekundären aliphatischen Aminen,

sowie deren Verwendung.

Die meisten der heute gebräuchlichen Elektrotauchlacke mit hohem Umgriff und gutem Korrosionsschutz bestehen aus Amino-Epoxidharzen auf Basis von Bisphenol A (2,2-Bis-(4-hydroxyphenyl)-propan) und Aminen und/oder Aminoalkoholen, wie sie z.B. in DE-A-34 22 457, DE-A-33 25 061 und DE-A-34 44 110 beschrieben sind. Die Vernetzung dieser Bindemittel erfolgt meist thermisch bei Einbrenntemperaturen zwischen 120 und 200°C. Die Vernetzung kann durch Reaktion mit blockierten Polyisocyanaten erfolgen, wie sie beispielsweise in DE-A-20 57 799, DE-A-21 31 060, DE-A-22 52 536, DE-A-22 65 195, DE-A-23 63 074 und DE-A-26 34 211 beschriben sind. Harnstoffkondensationsprodukte wie sie in der DE-A-33 11 514 beschrieben sind, können ebenfalls verwendet werden.

Eine andere Art der Vernetzung besteht in der Anwendung von phenolischen Mannichbasen, wie sie z.B. in der DE-A-34 22 257 beschrieben sind. Um bei diesen Vernetzern auf ausreichend niedrige Einbrenntemperaturen zu kommen, sind Bindemittel mit einem relativ Anteil von primären oder sekundären Aminogruppen nötig.

Trotz des insgesamt positiven Eigenschaftsbildes der so erhaltenen Lacke, weisen sie in bestimmten Bereichen Mängel auf die sie für eine Anwendung in besonders anspruchsvollen Bereichen, wie sie etwa in der Karosseriebeschichtung in der Automobilindustrie gegeben sind, nicht geeignet erscheinen lassen. Bindemittelsysteme mit blockierten Isocyanaten oder Harnstoffkondensationsprodukten zeigten erhebliche Unterschiede in der Haftung auf unterschiedlich vorbehandeltem Stahlblech. Bei der Vernetzung mit Mannichbasen war vor allem die Haftung auf nicht vorbehandeltem Blech sowie die Schichtdicke der erhaltenen Lackfilme nicht zufriedenstellend.

Aufgabe der vorliegenden Erfindung war es, die vorstehend genannten Mängel der Elektrotauchlacksysteme zu beheben. Überraschenderweise wurde dabei gefunden, daß eine Mischung aus Mannischbasen-Vernetzer und blockierten Isocyanaten bzw. Harnstoffkondensatiosprodukten die vorher gezeigten Nachteile der Einzelkomponenten weitgehend vermeidet. Besonders überraschend ist dabei, daß auch mit relativ hohem Mischungsanteil des Mannichbasen-Vernetzers in Verbindung mit einem Bindemittel, das relativ wenig primäre/sekundäre Aminogruppen aufweist, eine gute Vernetzung bei niedrigen Einbrenntemperaturen zu erreichen ist.

Gegenstand der vorliegenden Erfindung sind Bindemittel für die kathodische Elektrotauchlackierung, die durch Protonieren mit Säuren wasserverdünnbar sind, enthaltend

(A) 50 bis 95 Gew.% eines Polymerisations-, Polykondensations- oder Polyadditionsproduktes mit einem mittleren Molekulargewicht von 200 bis 20.000 mit primären und/oder sekundären Hydroxylgruppen und primären, sekundären und/oder tertiären Aminogruppen mit einer Aminzahl von 30 bis 150 und

(B) 5 bis 50 Gew.% eines Gemisches aus

(a) blockierten Polyisocyanaten und/oder Harnstoffkondensationsprodukten und

(b) einer oder mehrerer phenolischer Mannichbasen, erhältlich aus

($b_1$) einem oder mehreren mehrkernigen Polyphenolen,

($b_2$) Formaldehyd oder einer Formaldehyd-liefernden Verbindung und

($b_3$) einem oder mehreren sekundären aliphatischen Aminen,

sowie deren Verwendung zur Beschichtung von Gegenständen mit elektrisch leitenden Oberflächen.

Ferner bezieht sich die vorliegende Erfindung auf mit Lacküberzügen versehene Gegenstände, die durch Aufbringen der erfindungsgemäß hergestellten Überzugsmittel und Einbrennen erhalten worden sind.

DE-B 27 59 428 beschreibt ebenfalls ein Bindemittel für die kathodische Elektrotauchlackierung, das sich aber in seiner Zusammensetzung und bei den Vernetzungsreaktionen grundlegend von dem erfindungsgemäßen Bindemittel unterscheidet: Das Polymere A ist hier ein Umsetzungsprodukt eines Epoxidharzes mit einer Mannichbase , die in das Polymere A eingebaut wird, wobei aber noch keine Vernetzungsreaktion stattfindet. Als alleiniger Vernetzer B dient ein blockiertes Isocyanat. Bei der Vernetzungsreaktion reagiert dieses mit den reaktiven Gruppen des Polymeren A.

Zu den Aufbaukomponenten der erfindungsgemäßen Kunstharze gibt es im einzelnen folgendes zu sagen:

Als Komponente (A) kommen solche Polymerisations-, Polykondensations-oder Polyadditionsprodukte in Frage, die ein mittleres Molekulargewicht von 200 bis 20.000, vorzugsweise 1200 bis 4000 haben und primäre und/oder sekundäre Hydroxylgruppen und primäre, sekundäre und/oder tertiäre Aminogruppen mit einer Aminzahl von 30 bis 150, bevorzugt 45 bis 120, besonders bevorzugt 70 bis 100, aufweisen.

Als Polymerisationsprodukte können z.B. Polyacrylate eingesetzt werden, die durch Copolymerisation von 10 bis 70 Gew.-Teile an Methacrylsäureestern oder Methacrylamiden, welche eine sekundäre Aminogruppe tragen, z.B. N-Isopropylaminopropylmethacrylamid mit 30 bis 90 Gew.% an anderen Monomeren, wie (Meth)acrylestern, Acrylnitrilen, Styrol usw., hergestellt werden. Diese Polymerisationsprodukte können als Ausgangsprodukte für die weiter unten beschriebenen Umsetzungen mit Polyepoxiden dienen, wobei die Hydroxylgruppen eingeführt werden.

Als Polykondensationsprodukte sind z.B. Kondensationsprodukte aus Polycarbonsäuren und Polyaminen einsetzbar. Umsetzungsprodukte aus dimerisierten oder trimerisierten Fettsäuren und Polyaminen, die durch Umsetzung einer oder mehrerer der nachfolgend beschriebenen Polyepoxidverbindungen mit überschüssigem Diamin und Abtrennung des Überschusses nach vollständiger Umsetzung der Epoxidgruppen erhalten wurden, sind als Komponente (A) geeignet.

Geeignete Polyadditionsprodukte sind vor allem Umsetzungsprodukte von Polyepoxidverbindungen mit Aminen. Der Einsatz von Amino-Epoxidharzen wird für Grundierungen mit hohem Korrosionsschutzniveau bevorzugt. Beispiele für Amino-Epoxidharze sind Umsetzungsprodukte von epoxidgruppenhaltigen Harzen mit vorzugsweise endständigen Epoxidgruppen mit gesättigten und/oder ungesättigten sekundären und/oder primären Aminen bzw. Aminoalkoholen. Diese können am Alkylrest durch mindestens eine primäre und/oder sekundäre Hydroxylgruppe, durch die Mono- oder Dialkylaminogruppe und/oder durch eine primäre Aminogruppe, die durch Ketiminisierung geschützt wird, modifiziert sein.

Als Epoxidharze können beliebige Materialien verwendet werden, insbesondere, wenn sie ein mittleres Molekulargewicht von 300 bis 6000 und im Mittel 1,5 bis 3,0 Epoxidgruppen pro Molekül enthalten, vorzugsweise Verbindungen mit 2 Epoxidgruppen pro Molekül. Bevorzugt sind Epoxidharze mit mittleren Molekulargewichten von 350 bis 5000, insbesondere 350 bis 2000. Besonders bevorzugte Epoxidharze sind z.B. Glycidylether von im Mittel mindestens 2 phenolische Hydroxylgruppen im Molekül enthaltenden Polyphenolen, die sich in üblicher Weise durch Veretherung mit einem Epihalohydrin in Gegenwart von Alkali herstellen lassen. Beispiele für geeignete Phenolverbindungen sind 2,2-Bis-(4-hydroxyphenyl)-propan (Bisphenol A), 4,4′-Dihydroxybenzophenon, 1,1-Bis-(4-hydroxyphenyl)-ethan, 1,1-Bis-(4-hydroxyphenyl)-isobutan, 2,2-Bis-(4-hydroxy-tert.-butylphenyl)-propan, Bis-(4-hydroxynaphthyl)-methan und 1,5-Dihydroxynaphthalin. In manchen Fällen ist es wünschenswert, aromatische Epoxidharze mit höherem Molekulargewicht einzusetzen. Diese werden erhalten, indem man die oben genannten Diglycidylether mit einem Polyphenol, wie biespielsweise 2,2-Bis-(4-hydroxyphenyl)-propan reagieren läßt und dann die erhaltenen Produkte mit Epichlorhydrin unter Herstellung von Polyglycidylethern weiter umsetzt.

Eine andere geeignete Klasse von Epoxidharzen sind Polyglycidylether von phenolischen Novolakharzen, wodurch die Funktionalität von 2 bis auf etwa 6 Glycidylgruppen pro Molekül gesteigert werden kann. Ebenfalls geeignet sind Polyglycidylether von mehrwertigen Alkoholen wie von Ethylenglykol, Diethylenglykol, Triethylenglykol, 1,2-Propylenglykol, 1,3-Propandiol, 1,5-Pentandiol, 1,2,6-Hexantriol, Glycerin und 2,2-Bis-(4-hydroxycyclohexyl)-propan. Es können auch Polyglycidylester von Polycarbonsäuren verwendet werden.

Unter den bevorzugten Polyglycidylethern von Polyphenolen sind diejenigen mit Epoxid-Äquivalentgewichten im Bereich von 180 bis 1000 besonders bevorzugt. Aromatische Polyepoxide mit einem höheren Epoxid-Äquivalentgewicht können aus solchen mit einem niedrigen Epoxid-Äquivalentgewicht und Polyphenolen hergestellt werden.

Das Amino-Epoxidharz kann auch mit gesättigten oder ungesättigten Polycarbonsäuren und/oder Hydroxycarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure oder dimere Fettsäure. Als Hydroxyalkylcarbonsäuren werden Milchsäure, Dimethylpropionsäure oder auch carboxyl- und hydroxylgruppenhaltige Polyester verwendet. Bei der Umsetzung von überschüssigem Polyglycidylether mit niedrigem Molekulargewicht, mit Polycarbonsäuren und/oder Polyalkoholen werden als Zwischenstufe modifizierte Polyglycidylether erhalten, die dann weiter mit Aminen und/oder Aminoalkoholen reagieren.

Es können auch heterocyclische Epoxidverbindungen verwendet werden, wie 1,3-Diglycidyl-5,5-dimethylhydantoin, Triglycidylisocyanurat oder Diepoxide aus Bisimiden.

Das Einführen von Aminogruppen erfolgt entweder durch Addition von NH-reaktiven Verbindungen an die Epoxidgruppe oder durch Reaktion von Ketiminen, wie beispielsweise in DE-A-34 44 110 beschrieben, die durch Umsetzung eines primären Amins mit einer Carbonylverbindung unter Wasserabspaltung erhalten werden, oder durch Umsetzen der Hydroxylgruppen des Grundharzes mit basischen Monoisocyanaten, die durch Reaktion von aromatischen und/oder aliphatischen und/oder cycloaliphatischen Di- der Polyisocyanaten mit Dialkylaminoalkoholen entstehen, wie beispielsweise in DE-A27 07 405 beschrieben. Als NH-reaktive Verbindungen werden verwendet primäre Monoalkylamine wie Dialkylaminoalkylamin und/oder bevorzugt sekundäre Monoamine wie Dialkylamine, Monoalkylhydroxyalkylamine oder Dihydroxyalkylamine. Beispiele für einsetzbare Verbindungen sind Diethylamin, N,N′-Dimethylaminopropylamin, N-Methylaminoethanol, N-Ethylaminoethanol oder Diethanolamin. Beim Einsatz von primären Aminen wie Octylamin, Monoethanolamin, N,N-Dimethylaminopropylamin, N,N-Diethylaminoethylamin, N,N-Dimethylaminopentylamin oder Methoxypropylamin reagiert das Amin mit der Epoxidgruppe in Abhängigkeit von den angebotenen stöchiometrischen Verhältnissen mit 1 bis 2 Epoxidgruppen unter Molekülvergrößerung. Mit primären und sekundären Diaminen tritt eine Kettenverlängerung ein. Als sekundäre Diamine, bevorzugt langkettige Diamine, werden N,N′-Dialkyldiaminoalkane oder Umsetzungsprodukte von gesättigten Glycidylethern oder -estern mit primären Diaminoalkanen verwendet, wie das Additionsprodukt von Hexamethylendiamin mit 2 Mol Glycidylester der Versaticsäure. Als primäre Diamine werden bevorzugt $\alpha,\omega$-Diaminoalkane verwendet, wie 1,6-Diaminohexan oder Amidamine dimerer Fettsäuren. Um eine Mehrfachreaktion der primären Aminogruppen zu verhindern, ist es vorteilhaft, die primäre Aminogruppe durch Ketiminisierung mit einer Carbonylverbindung zu schützen und in dieser Form mit dem Epoxid umzusetzen.

Die Reaktion der Amine mit den Epoxiden beginnt schon bei Raumtemperatur und ist im allgemeinen exotherm. Um eine vollständige Umsetzung zu erreichen, ist es in der Regel notwendig, die Temperatur zeitweise auf etwa 50 bis 120°C zu erhöhen. Die Ketimingruppen erfordern eine höhere Reaktionstemperatur zwischen 80 und 150°C, bevorzugt zwischen 110 und 130°C. Das 1,2-epoxidgruppenhaltige Harz wird vor Zugabe des Amins in organischen Lösungsmitteln, wie Toluol, Xylol oder Methylisobutylketon gelöst.

Die für den Vernetzungsprozess wichtigen primären und/oder sekundären Hydroxylgruppen und Aminogruppen müssen in ausreichender Anzahl vorhanden sein. Sekundäre Hydroxylgruppen entstehen bei der Reaktion von Epoxidgruppen mit nukleophilen Verbindungen wie Phenolen oder Aminen.

Primäre Hydroxylgruppen werden bevorzugt über die Reaktion von Alkanolaminen mit Epoxidgruppen in das Bindemittel eingeführt. Bevorzugte Verbindungen sind N-Methylethanolamin, N-Ethylethanolamin und Diethanolamin.

Das Einführen von primären Aminogruppen in den Harzgrundkörper kann auf die einfachste Art dadurch erfolgen, daß eine diprimäre Diaminkomponente im Überschuß zu einem mindestens eine, bevorzugt zwei Epoxidgruppen pro Molekül enthaltenden Epoxidharz gegeben wird und nach erfolgter Reaktion der Überschuß an Diamin entfernt wird. Dazu kann neben einer einfachen Destillation auch ein Dünnschichtverdampfungsverfahren oder eine Wasserdampfdestillation angewendet werden. Eine ausreichende Zahl von primären Aminogruppen wird ebenfalls erreicht, wenn nur ein geringer Überschuß verwendet wird, der so gewählt wird, daß nach der Reaktion nur sehr wenig freies Diamin in dem Bindemittel enthalten ist, andererseits aber der Molekulargewichtsaufbau sich in den oben genannten Grenzen hält. Das Diamin kann dabei nach allgemein bekannten Verfahren mit einer Carbonylverbindung zu einem Ketimin umgesetzt werden, was den Vorteil eines kontrollierten Harzaufbaus bietet, da jede Ketimingruppierung nur einmal mit einer Epoxidgruppe reagiert.

Das Einführen von primären Aminogruppen kann auch durch Umsetzen von mindestens einer, bevorzugt mindestens zwei Epoxidgruppen pro Molekül enthaltenden Kunstharzen mit einem amino- und/oder hydroxylgruppenhaltigen Ketimin und/oder Aldimin und/oder Polyamin erfolgen. Bei dem bevorzugten Ketimin handelt es sich um Umsetzungsprodukte aus Ketonen und sekundären Aminogruppen enthaltenden Alkylaminen, wie Methylisobutylketon und Diethylentriamin. Die Reaktionstemperatur wird hier so gewählt, daß die Ketimingruppierung nicht mit dem Epoxid reagiert. Das Ketimin schützt daher die primäre Aminogruppe so, daß eine weitere funktionelle Gruppe, bevorzugt eine sekundäre Aminogruppe ohne Schwierigkeiten mit dem Epoxidharz umgesetzt werden kann.

Sekundäre Aminogruppen können nach dem schon beschriebenen Verfahren über eine Reaktion von Ketimingruppen mit Epoxidgruppen bei erhöhten Temperaturen erhalten werden.

Bei der Dispergierung der Kunstharze in Wasser hydrolysieren nicht umgesetzte Ketimingruppen zu primären Aminogruppen, die Epoxid-Ketimin-Addukte dagegen zu sekundären Aminogruppen.

Die vorstehend beschriebenen fremdvernetzenden, aminogruppenhaltigen Polymeren (A) werden zusammen mit Vernetzungsmittelgemischen (B) eingesetzt. Überraschenderweise wurde gefunden, daß Gemische aus blockierten Isocyanaten oder Harnstoffkondensationsprodukten mit phenolischen Mannichbasen-Vernetzern über den gesamten Mischungsbereich Eigenschaften aufweisen, die aus den Einzelkomponenten nicht zu erwarten waren. Je nach speziellem Aufbau der Komponente (A) werden Mischungsverhältnisse von 0.05:1 bis 19:1, bevorzugt 0,25:1 bis 4:1, verwendet.

Die blockierten Polyisocyanate (a) werden hergestellt, indem man ein multifunktionelles Isocyanat mit mindestens einer stöchiometrischen Menge einer monofunktionellen, aktiven Wasserstoff enthaltenden Verbindung umsetzt, wobei gegebenenfalls basische Katalysatoren wie tert.Amine zugegeben werden. Das erhaltene Reaktionsprodukte setzt sich beim Erwärmen mit den Amino- oder Hydroxylgruppen der Komponente (A) um, wobei die Schutzgruppe wieder abgespalten wird. Verbindungen, die zum Blockieren der Isocyanate geeignet sind, enthalten nur eine einzige Amin-, Amid-, Lactam-, Thiol- oder Hydroxylgruppe. Bevorzugt werden z.B. aliphatische oder cycloaliphatische Alkohole, wie 2-Ethylhexanol, Dialkylaminoalkohole wie Dimethylaminoethanol, Phenole wie Kresol, Oxime wie Methylethylketoxim, Amine wie Dibutylamin, Lactame wie $\epsilon$-Caprolactam, Imide wie Phthalimid, Malonsäure oder Acetessigester.

Als typische multifunktionelle Isocyanate eignen sich aliphatische, cycloaliphatische und/oder aromatische Polyisocyanate mit mindestens zwei Isocyanatgruppen pro Molekül. Beispiele hierfür sind die Isomeren oder Isomerengemische des Toluylendiisocyanat, Toluylentriisocyanat, 4,4'-Diphenylmethandiisocyanat, Diphenyltetraisocyanat und/oder Naphthyltetraisocyanat, sowie ihre Hydrierungsprodukte wie Dicyclohexylmethandiisocyanat. Bevorzugte aliphatische Diisocyanate sind Verbindungen der Formel I

$O=C=N\text{-}(CR_2)_r\text{-}N=C=O$ (I)

worin r eine ganze Zahl von 3 bis 12, insbesondere 6 bis 8 ist und R, das gleich oder verschieden sein kann, Wasserstoff oder einen niedrigen Alkylrest mit 1 bis 8 C-Atomen, vorzugsweise 1 oder 2 C-Atome darstellt. Beispiele hierfür sind Hexamethylendiisocyanat, 1,6-Diisocyanato-2,2,4-trimethylhexan und Isophorondiisocyanat.

Gemischt aliphatisch/aromatische Verbindungen sind auch geeignet. Als Triisocyanate haben sich die Produkte bewährte, die durch Trimerisation oder Oligomerisation aus Diisocyanaten oder Polyisocyanaten und polyfunktionelle OH- oder NH-Gruppen enthaltende Verbindungen dargestellt werden. Hierzu gehört z.B. das Biuret aus Hexamethylendiisocyanat und Wasser, das Isocyanurat des Hexamethylendiisocyanats oder das Addukt von Toluylendiisocyanat an Trimethylolpropan. Eine Molekülvergrößerung kann auch durch die Reaktion mit tert. Aminogruppen enthaltenden Polyalkoholen wie N-Methyldiethanolamin, Triethanolamin oder tert. Aminogruppen enthaltenden Polyaminen wie 3-(Methyl)-3-(2-aminoethyl)-aminopropylamin erfolgen. Um die Löslichkeit zu verbessern, können außerdem kettenabbrechende N-Dialkylaminoalkohole wie Dimethylaminoethanol oder N,N-Dialkylalkylendiamine wie Dimethylaminopropylamin oder N,N-Diethyl-N'-methyl-1,3-ethandiamin eingesetzt werden. Um wenig vergilbende Lacke herstellen zu können, werden aliphatische und cycloaliphatische Polyisocyanate bevorzugt.

Zur Herstellung der aminomethylierten Phenole (b) kommen alle mehrkernigen Phenole ($b_1$) mit mindestens zwei Phenolkernen in Betracht, die im Molekül mindestens zwei zu verschiedenen Hydroxylgruppen orthoständige Wasserstoffatome tragen. Beispiele solcher mehrkernigen Phenole sind solche der allgemeinen Formel (II)

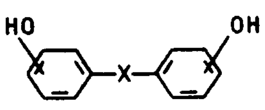

(II)

wobei die Hydroxylgruppen in ortho- oder para-Stellung zu X stehen und X ein geradkettiger oder verzweigter, zweiwertiger aliphatischer Rest mit 1 bis 3 Kohlenstoffatomen oder $SO_2$, SO, O oder $CH_2$-$NRCH_2$- (mit R gleich Alkylrest mit 1 bis 16 C-Atomen) ist; bevorzugtes Polyphenol gemäß Formel II ist 2,2-Bis-(4-hydroxyphenyl)-propan (Bisphenol A). Weitere geeignete Polyphenole sind niedermolekulare Umsetzungsprodukte aus Phenolen und Formaldehyd, sogenannte Novolake. Die benötigten Polyphenole können auch "in situ" aus Monophenolen und Formaldehyd erzeugt werden, wenn während der Aminomethylierung größere als dem eingesetzten Amin äquivalente Mengen an Formaldehyd eingesetzt werden.

Auch Umsetzungsprodukte aus Polyphenolen und Polyepoxiden können eingesetzt werden, wobei ein Überschuß an phenolischen OH-Gruppen gegenüber Epoxidgruppen eingesetzt werden muß. Ein solches kettenverlängertes Phenol läßt sich z.B. herstellen aus 2 Mol Bisphenol A und einem Mol des Diglycidylethers aus Bisphenol A und Epichlorhydrin.

Als Komponente ($b_3$) sind alle sekundären aliphatischen Amine geeignet. Bevorzugt werden solche

Amine eingesetzt, die eine gewisse Flüchtigkeit besitzen, z.B. solche mit einem Siedepunkt von unter 250 °C bei einem Druck von 1000 mbar. Beispiele geeigneter Amine sind Dialkylamine wie Dimethylamin nach, Diethylamin, Methylethanolamin, Ethylethanolamin, Morpholin, Piperidin. Besonders bevorzugt sind Dialkylamine, deren Alkylgruppen zusammen 5 bis 15 Kohlenstoffatome beinhalten wie z.B. Ethylpropylamin nach, Dipropylamin, Diisopropylamin, Dibutylamin, Diisobutylamin, Dipentylamin, Dihexylamin, Dicyclohexylamin sowie Gemische dieser Dialkylamine. Auch primäre Amine wie z.B. Methylamin, Ethylamin, Propylamin oder Butylamin können in untergeordneten Mengen mitverwendet werden.

Der Einbau der Amine ($b_3$) in die Polyphenole erfolgt über eine Methylenbrücke. Dazu wird Formaldehyd oder eine Formaldehyd-liefernde Verbindung ($b_2$) wie z.B. Paraformaldehyd benötigt. Diese Umsetzung der Phenole mit Aldehyd und sekundärem Amin wird Aminomethylierung oder "Mannich"-Reaktion genannt. Die Reaktion kann bei Raumtemperatur, zweckmäßigerweise jedoch bei erhöhter Temperatur bis etwa 150 °C durchgeführt werden. Lösemittel sind dabei nicht nötig. Auch ist es nicht nötig, das bei der Reaktion gebildete Wasser zu entfernen. Das Wasser kann jedoch problemlos unter vermindertem Druck oder mit einem organischen Lösemittel als Schleppmittel entfernt werden.

Die Mannich-Reaktion kann auch ohne Lösungsmittel durchgeführt werden, sofern die Reaktionsprodukte bei der Umsetzungstemperatur flüssig sind. Es können aber auch übliche Lösemittel wie Alkohole, Ketone, Ester, Ether oder Kohlenwasserstoffe eingesetzt werden. Beispiele geeigneter Lösemittel sind Butanol, Methylisobutylketon, Toluol und Ethylglykolacetat.

Zur Herstellung der erfindungsgemäßen Bindemittel werden 50 bis 95, vorzugsweise 60 bis 90 Gew.% der Komponente (A) mit 5 bis 50, vorzugsweise 10 bis 40 Gew.% der Komponente (B) entweder in Substanz oder zweckmäßigerweise in mit organischen Lösemitteln verdünnter Form gemisch. Häufig ist es vorteilhaft, die Komponenten durch Ankondensation verträglicher zu machen. Dazu genügt es, die Mischung der Komponenten einige Zeit zu erwärmen, z.B. auf 35 bis 110, vorzugsweise 50 bis 100 °C. Das Fortschreiten der Ankondensation, bei der im wesentlichen freie Methylolgruppen oder Aminomethylengruppen der Komponente (B) mit den primären bzw. sekundären Aminogruppen der Komponente (A) reagieren, kann durch Messen der Viskositätserhöhung verfolgt werden.

Zur Herstellung einer wäßrigen Dispersion wird die Bindemittelzusammensetzung (A) + (B) mit einer Säure, wie z.B. Ameisensäure, Essigsäure oder Milchsäure versetzt und anschließend auf Verarbeitungskonzentration verdünnt. Man kann jedoch auch die Bindemittelzusammensetzung langsam unter Rühren in angesäuertes Wasser einfließen lassen. Zur Herstellung von Elektrotauchbädern können dem erfindungsgemäßen Bindemittel noch andere Bindemittel, Pigmente sowie weitere bei der Elektrotauchlackierung übliche Hilfs- und Zusatzstoffe wie Füllstoffe, Korrosionsinhibitoren, Dispergierhilfsmittel, Entschäumer, Lösemittel oder auch weitere Harzkomponenten zugesetzt werden. Bevorzugt werden als Korrosionsinhibitoren Kupfer-II-Salze in einer Konzentration von 100 bis 1000 ppm verwendet. Die Elektrotauchbäder besitzen üblicherweise einen Feststoffgehalt von 5 bis 30 Gew.%. Die Abscheidung erfolgt üblicherweise bei Temperaturen von 15 bis 40 °C, während einer Zeit von 1 bis 5 Minuten bei einer angelegten Spannung von 50 bis 500 Volt. Der zu beschichtende elektrisch leitende Körper, beispielsweise ein Kupfer, Aluminium oder Stahlblech, das gegebenenfalls chemisch vorbehandelt, z.B. phosphatiert sein kann, wird dabei als Kathode geschaltet. Der abgeschiedene Film kann bei Temperaturen von 120 bis 200, vorzugsweise 130 bis 180 °C innerhalb von 5 bis 45, vorzugsweise 10 bis 30 Minuten gehärtet werden.

I Herstellung von Vorprodukten

Vorprodukt 1

In einem mit Wasserabscheider versehenen Reaktionsgefäß wurden 12.440 g Hexamethylendiamin, 18.660 g dimerer Fettsäure, 3000 g Leinölfettsäure und 2566 g Xylol auf 185 °C erhitzt. In 3 bis 4 Stunden wurden 1150 g Wasser und 1750 g Xylol abdestilliert. Das Produkt hat eine Aminzahl von 233mg KOH/g.

Vorprodukt 2

In einem mit einem Wasserabscheider versehenen Reaktionsgefäß wurden 662 g des Vorproduktes 1 mit 566 g Methylisobutylketon zum Rückfluß erhitzt. Dabei wurden in 10 Stunden 52 g Wasser abdestilliert. Das Produkt hatte eine Aminzahl von 134 und eine Lösemittelanteil von 25 Gew.%.

Komponente (A): Amino-Epoxidharz

In einem Reaktionsgefäß wurden 752 g eines Diglycidylethers aus 2,2-Bis-(4-hydroxyphenyl)-propan

(Bisphenol A) und Epichlorhydrin mit einem Äquivalentgewicht von 190, 205 g Bisphenol A und 50 g Propylenglykolmonophenylether mit 0,3 g Trimethylphosphin zur Reaktion gebracht. Bei einer Reaktionstemperatur von 130 °C wurde nach 3 Stunden ein Produkt mit einem Epoxidäquivalentgewicht von 430 erhalten. Mit 118 g Toluol wurde auf einen Festkörpergehalt von 85 Gew.% verdünnt. Anschließend wurden 598 g Vorprodukt 2 und 72 g Ethylethanolamin zugegeben und auf 120 °C erhitzt. Nach 5 Stunden war kein Epoxid mehr nachzuweisen. Mit 273 g eines 9:1-Gemisches aus Isobutanol und Butylglykol wurde auf einen Festkörpergehalt von 70 Gew.% verdünnt.

Vernetzungsmittel (B1): Harnstoffkondensationsprodukt

134 g Trimethylolpropan, 366 g Harnstoff und 1548 g Di-n-butylamin wurden gemeinsam auf 140 °C erhitzt, bis die anfänglich heftige Ammoniak-Entwicklung weitgehend abgeklungen war (ca. 1 Stunde). Anschließend wurde die Temperatur auf 160 °C erhöht. Nach Erreichen dieser Temperatur wurden während einer Stunde 348 g Hexamethylendiamin zugegeben, während die Innentemperatur langsam auf 190 bis 200 °C gesteigert wurde. Nach achtstündiger Umsetzung bei 200 °C ließ man auf 130 °C abkühlen. Es wurden 2 g Dibutylzinndilaurat hinzugefügt und bei Steigerung der Innentemperatur auf 175 °C 1110 g Di-n-butylamin abdestilliert. Der Rückstand wurde mit 270 g Methylisobutylketon auf einen Festkörpergehalt von ca. 80 Gew.% verdünnt.

Vernetzungsmittel (B2): blockiertes Isocyanat

1918 g trimerisiertes Hexamethylendiisocyanat wurden in einem Reaktionsgefäß mit 1376 g Methylisobutylketon vorgelegt. Bei 80 °C wurden 1292 g Di-n-butylamin zugegeben. Die Reaktion war nach 2 Stunden beendet. Das Produkt hatte einen Feststoffgehalt von 70 Gew.%.

Vernetzungsmittel (B3): Mannichbase

152 g Bisphenol A, 63 g eines Diglycidylethers von Bisphenol A mit einem Epoxidäquivalentgewicht von 189 und 0,1 g Tributylphosphin wurden 1 Stunde auf 160 °C erhitzt. Nach dieser Zeit ließ sich kein Epoxid mehr nachweisen, und es war ein kettenverlängertes Diphenol entstanden. Dazu wurden 53,8 g Isopropanol, 129 g Di-n-butylamin, 31,5 g Paraformaldehyd und 17,6 g Isobutanol gegeben und 2 Stunden auf 80 °C erhitzt. Das Produkt hatte einen Feststoffgehalt von 80 Gew.%.

Herstellung einer Pigmentpaste

640 g eines Diglycidylethers auf Basis von Bisphenol A und Epichlorhydrin mit einem Epoxidäquivalentgewicht von 485 und 160 g eines Diglycidylethers mit einem Epoxidäquivalentgewicht von 189 wurden bei 100 °C gemischt. In einem zweiten Gefäß wurden 452 g Hexamethylendiamin vorgelegt, auf 100 °C erhitzt und 720 g der heißen Epoxidharzmischung innerhalb einer Stunde zugegeben, wobei dei Temperatur bei 100 °C gehalten wurde. Nach weiteren 30 Minuten wurde unter Temperaturerhöhung und vermindertem Druck das überschüssige Hexamethylendiamin abdestilliert, wobei eine Temperatur von 205 °C und ein Druck von 30 mbar erreicht wurde. Anschließend wurden 57,6 g Stearinsäure, 172,7 g dimere Fettsäure und 115 g Xylol zugesetzt. Dann wurde innerhalb von 90 Minuten bei 175 bis 1800 °C das gebildete Wasser azeotrop abdestilliert. Anschließend wurden 58 g Butylglykol und 322 g Isobutanol zugegeben. Das Produkt hatte einen Feststoffgehalt von 70 Gew.% und eine Viskosität, gemessen bei 75 °C mit einem Platte/Kegel-Viskosimeter von 2240 mPas. 110 g des so erhaltenen Harzes wurden in einer Kugelmühle zusammen mit 36 g Ethylenglykolmonobutylether, 3 g Essigsäure, 170 g Titandioxid, 18 g Bleisilikat 4,5 g Ruß und 170 g Wasser bis zu einer Kornfeinheit <7µm vermahlen.

Herstellung einer Dispersion

Die jeweiligen Komponenten (A) und (B) wurden in solchen Mengen gemischt, daß die resultierende Mischung 137 g Feststoff im Mischungsverhältnis 70 % Komponente (A) und 30 % Komponente (B) enthält. Nach Zugabe von 3,1 g Essigsäure wurde mit entionisiertem Wasser unter Rühren eine 35 %ige Dispersion hergestellt. Dazu wurden 139 g der oben angegebenen Pigmentpaste gegeben und mit entionisiertem Wasser auf 1000 g aufgefüllt. Die so hergestellten Elektrotauchbäder wurden 7 Tage bei 30 °C gerührt. Dann wurde bei der angegebenen Spannung während 2 Minuten ein als Kathode geschaltetes Blech beschichtet und anschließend 20 Minuten bei 160 °C eingebrannt. Zu den wäßrigen Elektrotauchbädern

wurden teilweise 200 ppm Cu-II-acetat gegeben.

Die folgenden Beispiele zeigen die Anwendung der erfindungsgemäßen Bindemittelzusammensetzungen in kathodisch abscheidbaren Elektrotauchlacken:

| Beispiel | Block.Isocyanat (B2) | Vernetzungsmittel Harnstoffprod. (B1) | Mannichbase (B3) |
|---|---|---|---|
| 1 | - | 58,7 Teile | - |
| 2 | - | 14,7 Teile | 38,5 Teile |
| 3 | - | 44,0 Teile | 12,8 Teile |
| 4 | - | - | 51,4 Teile |
| 5 | 58,7 Teile | - | - |
| 6 | 14,7 Teile | - | 38,5 Teile |

Die Versuche 1, 4 und 5 entsprechend dem Stand der Technik, da jeweils nur ein Vernetzer verwendet wurde. Die Beispiele 2, 3 und 6 sind erfindungsgemäße Beispiele.

In den folgenden Tabellen sind die anwendungstechnischen Ergebnisse zusammengefaßt:

| | Versuch 1 | Versuch 2 | Versuch 3 |
|---|---|---|---|
| Baddaten: | | | |
| pH-Wert | 7,1 | 7,0 | 7,0 |
| Leitfähigkeit [$\mu Scm^{-1}$] | 2170 | 2190 | 2160 |
| Abscheidespannung [V] | 350 | 350 | 350 |
| Filmeigenschaften: | | | |
| Schichtdicke [$\mu m$] | 16 | 9 | 16 |
| Unterrostung [mm] | | | |
| 480 h ASTM* unbehandeltes Blech | 2,6 | 5,4 | 4,8 |
| (mit Cu-Zusatz) | - | 4,9 | 3,1 |
| 1000 h ASTM* phosph. Blech | 0,35 | 0,12 | 0,34 |
| 10 Zyklen Klimawechseltest** | 1,72 | 0,83 | 1,51 |
| | Versuch 4 | Versuch 5 | Versuch 6 |
| Baddaten: | | | |
| pH-Wert | 7,0 | 7,2 | 7,2 |
| Leitfähigkeit [$\mu Scm^{-1}$] | 2050 | 2220 | 2420 |
| Abscheidespannung [V] | 350 | 300 | 340 |
| Filmeigenschaften: | | | |
| Schichtdicke [$\mu m$] | 6 | 17 | 18 |
| Unterrostung [mm] | | | |
| 480 h ASTM* unbehandeltes Blech | 9,9 | - | 2,4 |
| (mit Cu-Zusatz) | 4,7 | - | 1,8 |
| 1000 h ASTM* phosph. Blech | 0,12 | 0,20 (720 H) | 0,19 |
| 10 Zyklen Klimawechseltest** | 0,77 | 3,50 | 1,09 |

* Salzsprühtest nach DIN 50 021

** nach Prüfblatt VDA 621 415

Wie aus den Beispielen ersichtlich ist, wird mit einem hohen Mischungsanteil an Mannich-Vernetzer (Versuch 2 und 6) eine deutlich bessere Haftung auf nicht vorbehandeltem Blech erzielt bei gleichzeitig guten Werten auf phosphatiertem Stahl. Ein hoher Anteil an Harnstoffkondensationsprodukt zeigt hohe Schichtdicken bei gleichzeitig deutlich verbessertem Klimawechseltest (Versuch 3).

**Patentansprüche**

**1.** Bindemittel für die kathodische Elektrotauchlackierung, das durch Protonieren mit Säuren wasserverdünnbar ist, enthaltend

(A) 50 bis 95 Gew.% eines Polymerisations-, Polykondensations- oder Polyadditionsproduktes mit einem mittleren Molekulargewicht von 200 bis 20.000 mit primären und/oder sekundären Hydroxylgruppen und primären, sekundären und/oder tertiären Aminogruppen mit einer Aminzahl von 30 bis 150 und

(B) 5 bis 50 Gew.% eines Gemisches aus

(a) blockierten Polyisocyanaten und/oder Harnstoffkondensationsprodukten und

(b) einer oder mehrerer phenolischer Mannischbasen, erhältlich aus

($b_1$) einem oder mehreren mehrkernigen Polyphenolen,

($b_2$) Formaldehyd oder einer Formaldehyd-liefernden Verbindung und

($b_3$) einem oder mehreren sekundären aliphatischen Aminen.

**2.** Bindemittel nach Anspruch 1, enthaltend ein Gemisch (B), dessen Mischungsverhältnis (a):(b) im Bereich 95:5 bis 5:95 liegt.

**3.** Bindemittel nach Anspruch 1 oder 2, enthaltend Amino-Epoxidharze als Komponente (A).

**4.** Verwendung des Bindemittels gemäß einem der Ansprüche 1 bis 3 in Form einer wäßrigen Dispersion, die gegebenenfalls zusätzlich Pigmente, Füllstoffe, Korrosionsinhibitoren, übliche Lackhilfsmittel und/oder Lösemittel enthält, als Überzugsmittel.

**5.** Verwendung des Bindemittels gemäß einem der Ansprüche 1 bis 3 in Form einer wäßrigen Dispersion, die als Korrosionsinhibitoren 100 bis 1000 ppm Kupfer-(II)-Salze enthält, als Überzugsmittel.

**6.** Verwendung der Überzugsmittel nach Anspruch 4 oder 5 für die kathodische Elektrotauchlackierung elektrisch leitfähiger Substrate.

**7.** Mit einem Lacküberzug versehener Gegenstand, erhältlich unter Verwendung eines Überzugsmittels gemäß Anspruch 4 oder 5.

**Claims**

**1.** A binder for cathodic electrocoating which becomes water-thinnable on protonation with an acid, comprising

(A) from 50 to 95 % by weight of a chain-growth polymerization, polycondensation or polyaddition product having an average molecular weight of from 200 to 20,000, primary and/or secondary hydroxyl groups, primary, secondary and/or tertiary amino groups and an amino number of from 30 to 150 and

(B) from 5 to 50 % by weight of a mixture of

(a) blocked polyisocyanates and/or urea condensation products and

(b) one or more phenolic Mannich bases obtainable from

($b_1$) one or more polycyclic polyphenols,

($b_2$) formaldehyde or a formaldehyde-donating compound and

($b_3$) one or more secondary aliphatic amines.

**2.** A binder as claimed in claim 1, containing a mixture (B) whose mixing ratio (a):(b) is within the range from 95:5 to 5:95.

**3.** A binder as claimed in claim 1, containing an aminoepoxy resin as component (A).

**4.** Use of a binder as claimed in any of claims 1 to 3 in the form of an aqueous dispersion, which may additionally contain pigments, fillers, corrosion inhibitors, customary paint assistants and/or solvents, as coating composition.

**5.** Use of a binder as claimed in any of claims 1 to 3 in the form of an aqueous dispersion which contains from 100 to 1,000 ppm of a copper (II) salt as a corrosion inhibitor, as coating composition.

6. Use of a coating composition as claimed in claim 4 or 5 for the cathodic electrocoating of electrically conducting substrates.

7. A coated article obtainable using a coating composition as claimed in claim 4 or 5.

**Revendications**

1. Liant pour le laquage par trempage électrophorétique cathodique, diluable à l'eau par protonation avec des acides, contenant
   (A) 5 à 95% en poids d'un produit de polymérisation, de polycondensation ou de polyaddition, d'un poids moléculaire moyen de 200 à 20.000, avec des radicaux hydroxyle primaires et/ou secondaires et des radicaux amino primaires, secondaires et/ou tertiaires, possédant un indice d'amine de 30 à 150 et
   (B) 5 à 90% en poids d'un mélange constitué
      (a) de produits de condensation de l'urée et/ou des polyisocyanates bloqués et
      (b) une ou plusieurs bases de Mannich phénoliques, que l'on peut obtenir à partir
         ($b_1$) d'un ou plusieurs polyphénols polynucléaires,
         ($b_2$) de formaldéhyde, ou d'un composé engendrant du formaldéhyde et
         ($b_3$) d'une ou plusieurs amines aliphatiques secondaires.

2. Liant suivant la revendication 1, contenant un mélange (B) dont le rapport de mélange (a):(b) varie dans la plage de 95:5 à 5:95.

3. Liant suivant la revendication 1 ou 2, contenant des résines amino-époxyde à titre de composant (A).

4. Utilisation du liant suivant l'une quelconque des revendications 1 à 3, sous la forme d'une dispersion aqueuse qui contient, éventuellement et complémentairement, des pigments, des charges, des inhibiteurs de corrosion, des adjuvants de peinture ou de laquage habituels et/ou des solvants, à titre d'agent de revêtement.

5. Utilisation du liant suivant l'une quelconque des revendications 1 à 3, sous la forme d'une dispersion aqueuse qui contient, à titre d'inhibiteurs de corrosion, de 100 à 1.000 ppm de sels du cuivre-(II), à titre d'agent de revêtement.

6. Utilisation de l'agent de revêtement selon la revendication 4 ou 5, pour le laquage par trempage électrophorétique cathodique de subjectiles conducteurs de l'électricité.

7. Objet revêtu d'un revêtement de vernis ou de laque, que l'on peut obtenir à l'aide de l'agent de revêtement suivant la revendication 4 ou 5.